Europäisches Patentamt

European Patent Office

Office européen des brevets

(19)

(11) Numéro de publication : **0 632 610 A1**

## (12) DEMANDE DE BREVET EUROPEEN

(21) Numéro de dépôt : **94401445.5**

(22) Date de dépôt : **27.06.94**

(51) Int. Cl.⁶ : **H04J 3/06, H04L 27/22**

(30) Priorité : **29.06.93 FR 9307905**

(43) Date de publication de la demande :
**04.01.95 Bulletin 95/01**

(84) Etats contractants désignés :
**DE ES FR GB IT NL SE**

(71) Demandeur : **ALCATEL TELSPACE**
**5, rue Noel Pons**
**F-92734 Nanterre Cédex (FR)**

(72) Inventeur : **Sehier, Philippe**
**71, Rue Jean Jaures**
**F-92300 Levallois Perret (FR)**
Inventeur : **Lepape, Yannick**
**17, Rue de Normandie**
**F-926000 Asnieres (FR)**

(74) Mandataire : **Pothet, Jean Rémy Emile Ludovic**
**et al**
**c/o SOSPI**
**14-16 rue de la Baume**
**F-75008 Paris (FR)**

(54) **Dispositif de détection de mot unique dans un système BPSK - TDMA.**

(57)   Un dispositif de récupération de la porteuse d'un signal de type TDMA fournit l'enveloppe complexe ($r_k$) de ce signal sur une voie réelle (P) et une voie imaginaire (Q). Des moyens de décalage angulaire (60,61) de $\pi/4$ de la constellation de l'enveloppe complexe ($r_k$) fournissent un signal complexe ($Z_k$) sur une voie principale et sur une voie auxiliaire. Des moyens (65,66,67,68,69) de détection d'énergie pilotent un multiplexeur (70) pour qu'il fournisse à un corrélateur (71) la voie, réelle ou imaginaire, porteuse de l'énergie la plus importante. Le corrélateur (71) calcule le niveau de corrélation (x) entre le signal de sortie du multiplexeur (70) et un mot unique (MU) de référence. Des moyens de comparaison (72,73,74) du niveau de corrélation (x) avec une valeur de seuil (S) indiquent la détection du mot unique (MU) dans le signal de la voie appliquée au corrélateur (71).

FIG.6

EP 0 632 610 A1

Le domaine de l'invention est celui de la synchronisation d'un modem analogique récepteur de signaux, notamment radioélectriques, sur des paquets d'informations numériques reçus.

Plus précisément, la présente invention concerne un dispositif apte à détecter ce qu'il est convenu d'appeler un mot unique situé dans les préambules de paquets de signaux transmis en AMRT ("Accès Multiple à Répartition dans le Temps" ou TDMA en anglais). Le dispositif de l'invention peut notamment être utilisé pour la transmission de signaux par satellite. L'invention concerne également un procédé de détection mis en oeuvre dans un tel dispositif.

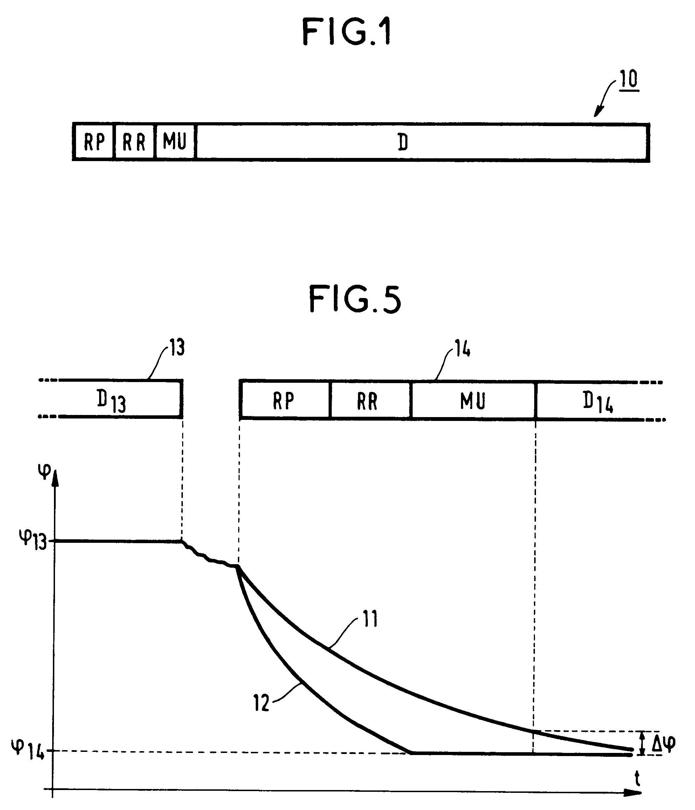

La figure 1 représente la structure d'un paquet 10 transmis dans un système de type TDMA. Le paquet 10 comporte un préambule constitué de mots RP, RR et MU, ce préambule étant suivi de données D constituant l'information utile.

Le mot RP est un préambule de récupération de porteuse et est constitué par une succession de symboles identiques, le symbole 11 par exemple (porteuse non modulée).

Le mot RR est un préambule de récupération de rythme et est constitué par une alternances de symboles, par exemple par des symboles 00 et 11 alternés ou alors par des symboles 10 et 01 alternés.

Le mot MU est appelé mot unique et permet de localiser le premier symbole des données D. Il est par exemple constitué de 32 symboles prenant leur valeur dans {00,11} (modulation QPSK ou seuls deux états opposés sont utilisés). On conviendra par la suite que le symbole 00 correspond à un échantillon 0 et que le symbole 11 correspond à un échantillon 1. La position de ce mot unique MU est détectée par corrélation au niveau d'un modem récepteur de tels paquets.

Dans le système de transmission considéré dans la présente invention, les données sont modulées en QPSK (Quaternary Phase Shift Keying ou MDP4) alors que les préambules de paquets n'utilisent que deux états opposés de la constellation sur les quatre états possibles et leur modulation peut donc être considérée comme étant de la BPSK (Binary Phase Shift Keying ou MDP2).

Les paquets reçus par un modem proviennent généralement de plusieurs stations distantes et il est nécessaire de synchroniser les différentes stations pour que deux stations distinctes n'émettent pas simultanément dans le même créneau temporel. Cette synchronisation des stations n'évite cependant pas que les paquets reçus par un modem subissent des dérives temporelles et fréquentielles, dues notamment aux mouvements du satellite et au milieu de transmission pouvant présenter des hétérogénéités. Ainsi, chaque paquet est reçu à un instant aléatoire, à l'intérieur d'une fenêtre temporelle, et sur une fréquence aléatoire, à l'intérieur d'une fenêtre fréquentielle. Le modem doit donc être capable de se synchroniser temporellement et fréquentiellement sur chaque nouveau paquet reçu en phase de communication.

On ne traitera ici que de la synchronisation temporelle qui comporte deux phases:
- la synchronisation du rythme qui consiste à déterminer l'instant où le diagramme de l'oeil du signal reçu est le plus ouvert, afin d'optimiser l'instant d'échantillonnage du signal. Cette synchronisation est assurée à l'aide du mot RR de récupération de rythme ;
- la synchronisation paquet qui consiste à déterminer l'instant d'arrivée de chaque paquet et donc la position du premier symbole de l'information utile D.

La présente invention concerne plus particulièrement la synchronisation paquet.

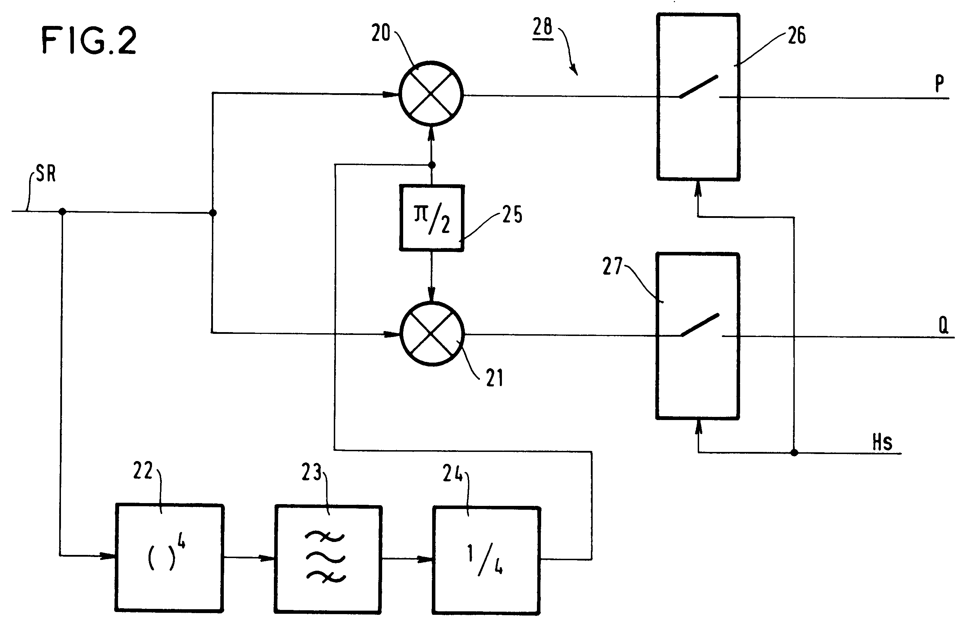

La figure 2 représente un dispositif 28 de récupération de la porteuse d'un signal SR reçu par un modem analogique fonctionnant en mode TDMA.

Le signal SR est appliqué à deux mélangeurs 20 et 21 ainsi qu'à un circuit 22 qui élève le signal SR à la puissance 4 afin de supprimer la modulation de phase. Le circuit 22 est suivi par un filtre passe-bande 23 centré sur la fréquence 4Fo où Fo est la fréquence de la porteuse du canal considéré. Le filtre 23 est suivi par un diviseur 24 de fréquence par 4 fournissant la porteuse récupérée au mélangeur 20 et à un déphaseur 25 de $\pi/2$ suivi du mélangeur 21. Les signaux de sortie des mélangeurs 20 et 21 sont appliqués à des échantillonneurs 26 et 27 commandés par un signal d'horloge à la fréquence symbole Hs. Les signaux de sortie des échantillonneurs 26 et 27 constituent deux voies P et Q véhiculant des échantillons en quadrature de phase.

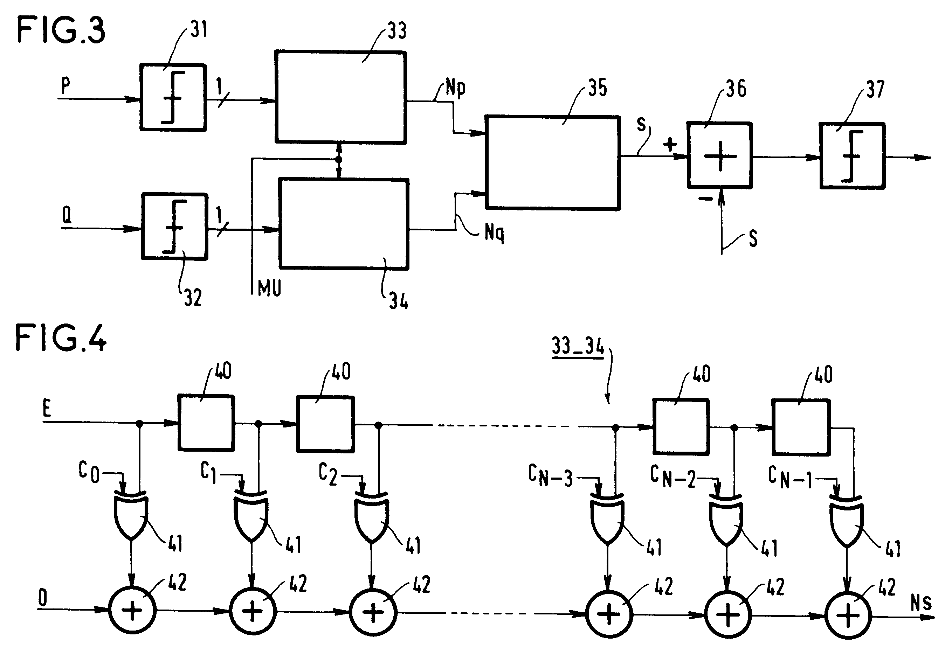

Les échantillons des voies P et Q sont appliqués à un démodulateur ainsi qu'à un dispositif de détection de mot unique représenté à la figure 3. Ce dispositif a pour fonction d'indiquer qu'un mot unique a été détecté dans le signal reçu, ce qui permet de le localiser temporellement et donc d'indiquer que les échantillons d'information utile sont disponibles.

Les échantillons des voies P et Q sont appliqués à des comparateurs de niveau 31, 32 fournissant en sortie un échantillon régénéré pour chaque échantillon reçu. Par exemple, l'échantillon régénéré vaut 1 (respectivement 0) si l'échantillon reçu est positif (respectivement -1). Les comparateurs sont suivis de corrélateurs 33, 34 identiques recevant chacun le mot unique MU, constituant le mot de référence.

Un de ces corrélateurs est représenté à la figure 4. Les échantillons issus du comparateur situé en amont sont appliqués à une entrée E et traversent tour à tour des bascules 40 commandées à la fréquence symbole Fs et sont successivement comparés, à l'aide de portes ou-exclusif 41, avec les bits $C_0$ à $C_{N-1}$ du mot unique MU de référence. Le nombre de bascules 40 est égal à celui du nombre de bits N du mot unique MU. Les sorties des portes 41 sont sommées par des additionneurs 42 pour fournir un niveau de corrélation Ns.

Ce corrélateur calcule donc à chaque temps symbole la distance de Hamming entre les échantillons reçus et le mot unique. Le niveau de corrélation Ns est égal à 0 si la corrélation est maximale, c'est à dire si les bits appliqués aux entrées de chaque porte 41 sont identiques entre eux, alors qu'il est maximal (environ égal à N/2) en l'absence totale de corrélation. On s'arrange dans les configurations de modems existants pour que le mot unique MU ait une corrélation la plus faible possible avec le mot RR de récupération de rythme qui le précède pour que la fenêtre de recherche de corrélation puisse être ouverte avant l'apparition du mot MU.

En référence à la figure 3, les niveaux de sortie des corrélateurs 33 et 34 sont respectivement notés Np et Nq et appliqués à des moyens de combinaison 35. Ces moyens de combinaison 35 fournissent un signal de sortie de niveau s égal à :

$$s = MAX (|N - Np - Nq|, |Np - Nq|)$$

où MAX correspond à la fonction sélectionnant le maximum des valeurs $|N-Np-Nq|$ et $|Np-Nq|$. Ainsi, si une corrélation est détectée, s = N (Np = Nq = 0), alors qu'en l'absence de corrélation, s $\approx$ 0 (Np $\approx$ Nq $\approx$ N/2).

Le niveau de sortie s des moyens de combinaison 35 est appliqué à un soustracteur 36 recevant une valeur de seuil S. Ce soustracteur fournit s-S à un organe de décision 37 indiquant si une corrélation a été détectée, c'est à dire si le mot unique MU a été détecté.

La valeur du seuil S est choisie en fonction du bruit de la liaison de transmission, en réalisant un compromis entre une valeur faible pour permettre une détection du mot unique et forte pour que l'organe de décision 37 ne génère pas de fausse alarme (fausse détection de mot unique).

Le problème posé par un dispositif de détection de mot unique de ce type est qu'avant l'apparition du codage correcteur d'erreurs en transmission AMRT, les modems fonctionnaient avec un rapport signal sur bruit élevé. Le seuil de fonctionnement se situait aux alentours d'un rapport signal sur bruit de 9 dB pour le canal de transmission considéré, pour un taux d'erreur inférieur à $10^{-4}$. Il était alors possible d'utiliser un filtre de récupération de porteuse ayant une bande relativement large, permettant de ce fait une rapide acquisition de la fréquence porteuse.

L'apparition de circuits de décodage spécifiques fonctionnant à vitesse élevée a maintenant permis l'utilisation de codes correcteurs d'erreurs performants. L'utilisation de ces techniques a fortement rabaissé le seuil de fonctionnement : il est maintenant possible d'atteindre un taux d'erreur de transmission inférieur à $10^{-4}$ pour un rapport signal sur bruit de 3 dB seulement après codage de l'information à transmettre. Ces performances peuvent par exemple être obtenues avec un code convolutionnel de taux 1/2 et de longueur de contrainte 7.

La largeur de bande du filtre 23 de récupération de phase de la figure 2 doit être ajustée en fonction de ce rapport signal sur bruit. Lorsque ce rapport est élevé, il est possible de prendre une bande relativement large, de façon à permettre un temps d'acquisition faible. Une variation de la fréquence porteuse pourra alors être rapidement prise en compte. En revanche, lorsque ce rapport est faible, comme dans le cas où des codes correcteurs d'erreurs sont utilisés, la largeur de bande doit être réduite de façon à minimiser au mieux la probabilité de saut de cycle introduite par le diviseur 24 de la figure 2. Cette réduction de largeur de bande est faite au détriment du temps d'acquisition et il y a donc un risque que la boucle de récupération de porteuse ne soit pas stabilisée à la fin du préambule, ce qui entraîne un taux d'erreur en début de paquet, en particulier sur le mot unique, supérieur au taux d'erreur obtenu en milieu et en fin de paquet.

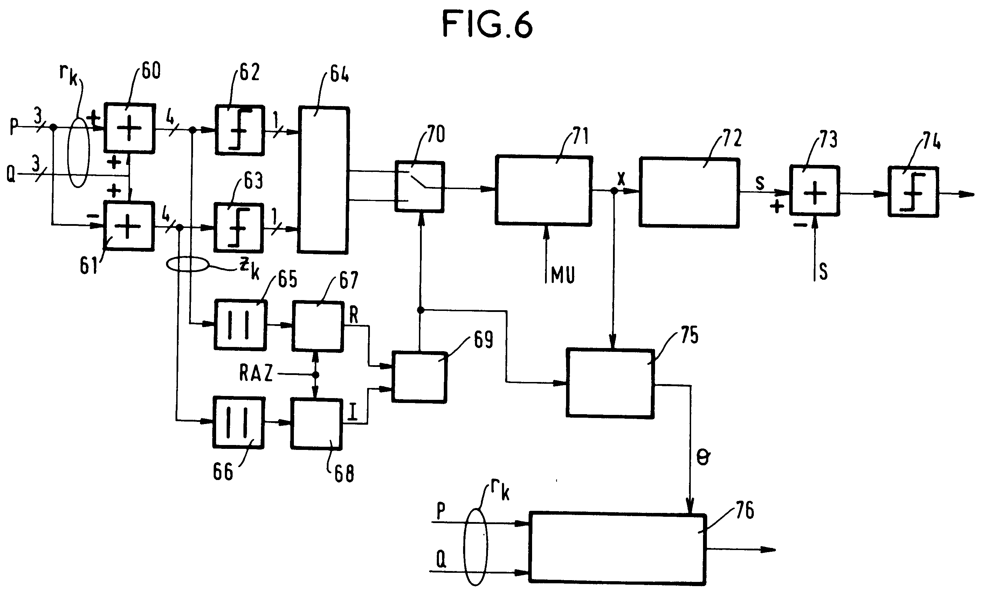

Ce phénomène est illustré par les courbes 11 et 12 de la figure 5 représentant l'évolution de la phase $\varphi$ de la porteuse du modem pour une bande de boucle faible (courbe 11) et importante (courbe 12), ces évolutions étant tracées pour deux paquets successifs 13, 14 également représentés.

Un paquet 13 comportant des données $D_{13}$ est reçu par le modem. Ce paquet est suivi par un autre paquet 14 comportant un préambule tel que défini précédemment, ainsi que des données $D_{14}$. Lors du décodage du paquet 13, le générateur de fréquence porteuse du modem a une phase $\varphi_{13}$. En fin du paquet 13, le modem reçoit du bruit et la phase de la porteuse évolue ératiquement jusqu'au début du préambule du paquet 14. La phase de la porteuse du paquet 14 est référencée $\varphi_{14}$ et le générateur de fréquence du modem va générer une fréquence dont la phase sera $\varphi_{14}$.

Pour une bande de boucle faible, il subsiste une erreur de phase $\Delta\varphi$ au début de l'information utile $D_{14}$ alors qu'une bande de boucle importante aurait permis une stabilisation rapide de la phase bien avant l'apparition de cette information utile. Il n'est cependant pas possible d'utiliser une bande de boucle importante en raison des sauts de cycles (rotations de la constellation du signal reçu).

La diminution du rapport signal sur bruit due à l'utilisation de codes correcteurs d'erreurs a obligé les fabricants à rallonger la longueur du préambule (mots RP et RR) de chaque paquet pour assurer qu'à la fin de chaque préambule l'erreur de phase de la porteuse soit nulle. La solution consistant à rallonger ce préambule n'est pas acceptable car le rendement des paquets (nombre d'échantillons de synchronisation / nombre total d'échantillons dans un paquet) est alors diminué.

La présente invention a pour objectif de fournir un dispositif permettant d'assurer une détection de mot unique modulé en BPSK sans nécessiter l'utilisation de préambules rallongés par rapport à l'état de la technique.

Un autre objectif de l'invention est de permettre une rapide stabilisation de la phase de la porteuse détectée, c'est à dire l'utilisation d'une bande de boucle de récupération de porteuse importante, sans subir les inconvénients des sauts de cycle pouvant affecter le signal reçu.

Un objectif complémentaire est de fournir un procédé de détection de mot unique dans une trame d'un signal de type TDMA.

Ces objectifs, ainsi que d'autres qui apparaîtront par la suite, sont atteints grâce à un dispositif de détection de mot unique modulé en BPSK et adapté à un modem fonctionnant en mode TDMA, du type comprenant un dispositif de récupération de la porteuse d'un signal reçu et fournissant l'enveloppe complexe du signal reçu sur une voie réelle et une voie imaginaire, ce dispositif comportant :

- des moyens de décalage angulaire de $\pi/4$ de la constellation de l'enveloppe complexe, ces moyens de décalage angulaire fournissant un signal complexe sur une voie principale et sur une voie auxiliaire constituées chacune d'une voie réelle et d'une voie imaginaire ;
- des moyens de retard de N échantillons sur la voie principale fournissant, sur une voie réelle et sur une voie imaginaire retardées, des échantillons retardés à un multiplexeur ;
- des moyens d'estimation sur la voie auxiliaire pour estimer laquelle des voies réelle et imaginaire de la voie principale est porteuse de l'énergie la plus importante, les moyens d'estimation fournissant une information au multiplexeur pour que celui-ci fournisse sur sa sortie l'une des voies retardées, réelle ou imaginaire de la voie principale, correspondant à celle des voies de la voie auxiliaire porteuse de l'énergie la plus importante ;
- un corrélateur recevant un mot unique de référence pour calculer un niveau de corrélation entre le signal de sortie du multiplexeur et le mot unique de référence ;
- des moyens de comparaison de ce niveau de corrélation avec une valeur de seuil pour indiquer la détection du mot unique dans le signal de la voie appliquée au corrélateur lorsque le niveau de corrélation est supérieur à cette valeur de seuil.

Avantageusement et dans un premier mode de réalisation, les moyens d'estimation comprennent:

- des moyens de sommation sur N échantillons des énergies détectées sur chacune des voies réelle et imaginaire de la voie auxiliaire ;
- des moyens de comparaison entre elles des énergies sommées, les moyens de comparaison fournissant l'information précitée au multiplexeur pour que celui-ci fournisse sur sa sortie l'une des voies retardées, réelle ou imaginaire, correspondant à celle des voies de la voie auxiliaire dont la somme des énergies est la plus importante.

Dans un second mode de réalisation, les moyens d'estimation comprennent :

- des moyens de calcul de la différence d'énergie détectée entre chaque échantillon de la voie réelle et chaque échantillon de la voie imaginaire reçus au même instant ;
- des moyens de sommation sur N échantillons des différences d'énergie ;
- des moyens de comparaison de la somme des différences d'énergie avec une valeur de référence sensiblement égale à la moitié de la somme des différences d'énergie, les moyens de comparaison générant l'information à l'attention du multiplexeur.

Le dispositif de l'invention comporte préférentiellement en outre des moyens de levée d'ambiguïté recevant d'une part l'information fournie au multiplexeur et d'autre part le niveau de corrélation pour fournir à un démodulateur la valeur de l'angle de rotation de la constellation par rapport à un angle de référence.

L'invention concerne également un procédé de détection de mot unique adapté à un modem analogique fonctionnant en mode TDMA, le mot unique étant modulé en BPSK, ce procédé consistant à :

- décaler de $\pi/4$ la constellation de l'enveloppe complexe d'un signal issu d'un dispositif de récupération de porteuse ;
- détecter quelle voie de la constellation, réelle ou imaginaire, est porteuse de l'énergie la plus importante et calculer un niveau de corrélation entre le signal numérique véhiculé par cette voie et un mot unique de référence ;
- fournir une information de détection du mot unique dans le signal de la voie porteuse de l'énergie la plus importante lorsque le niveau de corrélation devient supérieur à une valeur prédéterminée.

D'autres caractéristiques et avantages apparaîtront à la lecture de la description suivante de deux modes de réalisation préférentiels de l'invention, donnés à titre illustratif et non limitatif, et des dessins annexés dans lesquels :

- la figure 1 représente la structure d'un paquet 10 transmis dans un système de type TDMA ;

- la figure 2 représente un dispositif connu de récupération de la porteuse d'un signal reçu en mode TDMA ;
- la figure 3 représente un dispositif de détection de mot unique de type connu ;
- la figure 4 représente un des corrélateurs de la figure 3 ;
- la figure 5 représente l'évolution de la phase de la porteuse d'un modem pour une bande de boucle faible et importante ;
- la figure 6 est un schéma synoptique d'un premier mode de réalisation d'un dispositif de détection de mot unique selon l'invention ;
- la figure 7 est un schéma synoptique d'un deuxième mode de réalisation d'un dispositif de détection de mot unique selon l'invention ;
- les figures 8A à 8D sont des représentations graphiques des traitements effectués.

Les figures 1 à 5 ont été décrites précédemment en référence à l'état de la technique.

La figure 6 est un schéma synoptique d'un premier mode de réalisation d'un dispositif de détection de mot unique selon l'invention.

Les échantillons des voies P et Q, notés p et q et issus d'un dispositif de récupération de porteuse tel que représenté à la figure 2, sont admis dans des moyens de décalage angulaire de $\pi/4$, ici constitués par un additionneur 60 à 3 bits ("Soft Decision") et un soustracteur 61, également à 3 bits, fournissant respectivement p+q et p-q (quantifiés sur 4 bits). On réalise ainsi une rotation des échantillons reçus.

Cette rotation peut s'exprimer de la manière suivante :

$$z_k = (1 - j).r_k = z_k^c + j.z_k^s$$

où $r_k$ est l'enveloppe complexe de l'échantillon reçu à l'instant k.Ts (Ts = 1/Hs = temps symbole), avec

$$r_k = \sqrt{2E_b}.a_{k+d}.e^{j\theta} + n_k$$

où $\theta$ représente l'ambiguïté de phase ($\theta$ = 0, $\pi/2$, $\pi$ ou $3\pi/2$), $n_k$ est le bruit blanc complexe ($n_k = n_k^c + jn_k^s$), $E_b$ est l'énergie par échantillon codé et d est le retard temporel, exprimé en nombre d'échantillons, du récepteur par rapport au signal reçu.

Les composantes réelles et imaginaires de $z_k$ sont appliquées sur une voie principale à des organes de décision 62, 63 suivis d'un circuit retard 64 de compensation de N échantillons et sur une voie auxiliaire à des moyens d'estimation d'énergie destinés à détecter laquelle des voies réelle et imaginaire de la voie principale est porteuse de l'énergie la plus importante. Ces moyens d'estimation sont ici constitués de circuits de valeur absolue 65, 66 suivis d'accumulateurs 67, 68 de N échantillons comportant une entrée de remise à zéro RAZ et d'un comparateur 69 recevant les signaux de sortie des accumulateurs 67 et 68.

Les circuits de valeur absolue 65 et 66 et les accumulateurs 67 et 68 réalisent une détection de l'"énergie" disponible sur les voies réelles et imaginaires, permettant de lever les ambiguïtés de phase du signal reçu, et plus précisément du préambule de chaque paquet. Il est ainsi possible de détecter si la constellation reçue est située sur l'axe réel ($\theta$ = 0 ou $\pi$) ou sur l'axe imaginaire ($\theta$ = $\pi/2$ ou $3\pi/2$). Les accumulateurs 67 et 68 somment les valeurs absolues de N échantillons consécutifs et fournissent un signal de sortie à la fréquence Fs/N où Fs = 1/Ts.

Il est à noter que les circuits de valeur absolue 65 et 66 peuvent également être remplacés par des circuits élevant chaque échantillon au carré, cette implémentation étant cependant plus complexe.

Les accumulations des valeurs absolues des composantes réelles et imaginaires de $z_k$ peuvent s'écrire :

$$R = \sum_{i=0}^{i=N} |z_i^c| \quad et \quad I = \sum_{i=0}^{i=N} |z_i^s|$$

où N désigne le nombre d'échantillons du mot unique MU et au retard (en nombre d'échantillons) apporté par le circuit 64.

Les sorties respectives R et I des accumulateurs 67 et 68 sont appliquées au comparateur 69 qui compare R à I et fournit à un multiplexeur 70 recevant les voies réelle et imaginaire retardées (de la voie principale) une information pour que celui-ci fournisse sur sa sortie l'une des voies retardées de la voie principale, cette voie retardée correspondant à celle qui est porteuse de l'énergie la plus importante.

Le multiplexeur 70 fournit ainsi à un corrélateur 71, recevant par ailleurs le mot unique MU, les signaux de la voie (réelle ou imaginaire) qui porte le plus d'énergie. Le corrélateur 71 peut être identique à celui décrit en référence à la figure 5 et fournit un niveau de corrélation x, fonction de la distance de Hamming entre le mot unique MU de référence et les échantillons de la voie sélectionnée, à des moyens de comparaison 72, 73 du niveau de corrélation calculé x avec une valeur de seuil S pour indiquer la détection du mot unique dans le signal appliqué au corrélateur 71.

Dans le mode de réalisation représenté, les moyens de comparaison comprennent un circuit de calcul 72 fournissant un niveau de sortie s égal à :

$$s = \left| N - 2x \right|$$

Ce niveau de sortie s est comparé avec le seuil S dans un soustracteur 73 recevant le seuil S et suivi d'un organe de décision 74 indiquant si le mot unique a été détecté dans le signal reçu.

Les signaux de sortie du comparateur 69 et du corrélateur 71 peuvent également être appliqués à un circuit de levée d'ambiguïté 75 optionnel qui décide de la phase $\theta$ de la constellation reçue. Cette phase $\theta$ est décidée selon le tableau ci-dessous :

| Décision en sortie du comparateur 69 | Valeur de N-2x | Phase $\theta$ décidée |
|---|---|---|
| R > I | N-2x > 0 | 0 |
| R > I | N-2x < 0 | $\pi$ |
| R < I | N-2x > 0 | $\pi/2$ |
| R < I | N-2x < 0 | $3\pi/2$ |

La valeur de $\theta$ est fournie à un démodulateur 76 recevant par ailleurs l'enveloppe complexe $r_k$. Ce démodulateur 76 comporte par exemple un décodeur de Viterbi non transparent aux sauts de cycles et qui nécessite donc la connaissance de $\theta$ pour assurer le décodage des signaux qui lui sont fournis. Bien entendu, si le démodulateur 76 n'a pas besoin de l'information de saut de cycle, le circuit de levée d'ambiguïté 75 n'est pas nécessaire.

L'invention permet de fonctionner avec une bande de boucle de récupération de porteuse (filtre 23 de la figure 2) relativement importante, ce qui permet d'assurer une stabilisation de la phase de cette porteuse récupérée lorsque le mot unique apparaît et donc de diminuer le taux d'erreur local en début d'information utile sur les échantillons d'information, tout en ne nécessitant pas de rallonger le préambule.

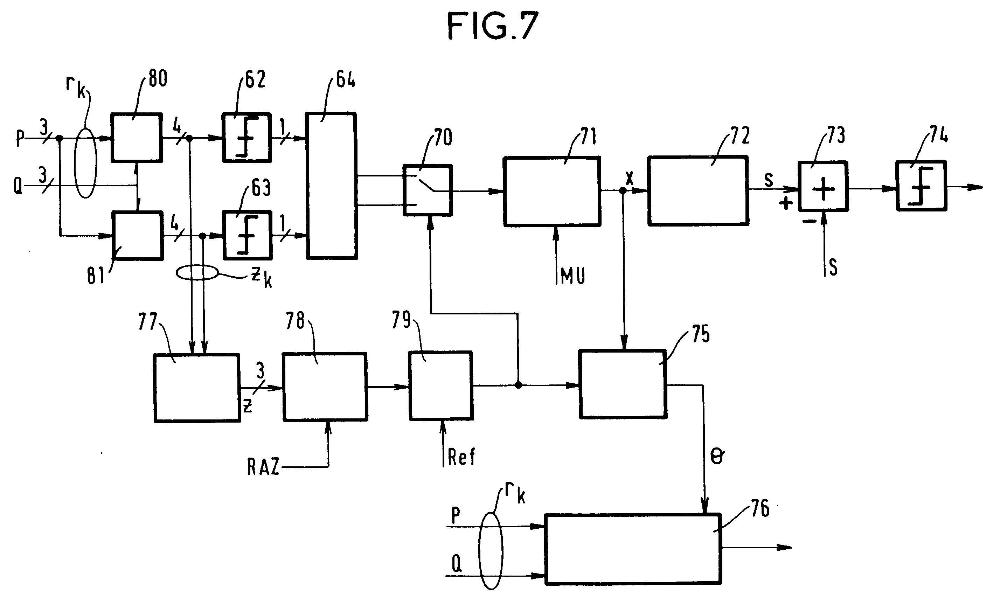

La figure 7 est un schéma synoptique d'un deuxième mode de réalisation d'un dispositif de détection de mot unique selon l'invention. Ce mode de réalisation est plus proche d'une implantation réelle du dispositif de l'invention puisqu'il tient compte du fait que l'on travaille en précision finie (sur 3 bits) alors que le dispositif de la figure 6 est plus conceptuel et suppose de travailler sur des échantillons réels.

Les moyens de décalage angulaire de $\pi/4$ sont ici constitués de modules 80 et 81, le premier fournissant p+q+1 et le second q-p sur sa sortie à chaque temps symbole, où p et q sont respectivement les échantillons codés sur par exemple 3 bits des voies P et Q à chaque temps symbole Ts. Ces opérations réalisent également une rotation de $\pi/4$ de la constellation de l'enveloppe complexe $r_k$. Les sorties des modules 80 et 81 sont fournies aux moyens d'estimation qui comprennent notamment des moyens de calcul 77 de la différence d'énergie détectée entre chaque échantillon p+q+1 de la voie réelle et chaque échantillon q-p de la voie imaginaire reçus au même instant. Les moyens de calcul 77 fournissent à chaque temps symbole une grandeur z égale à :

$$z = \frac{\left| p+q+1 \right| - \left| q-p \right| - 1}{2}$$

On notera que ce calcul permet de gagner un bit dans le calcul de z. Si les convertisseurs analogique-numérique compris dans les échantillonneurs 26 et 27 de la figure 2 ont une définition de 3 bits, ils fournissent chacun des échantillons compris entre les valeurs -4 et +3 (p ou q valent

$$\left\lfloor \frac{Ve}{\delta} \right\rfloor$$

avec Ve la tension d'entrée du convertisseur et $\delta$ le quantum). Une valeur de sortie a d'un convertisseur peut alors être considérée comme une tension équivalent à $(a+1/2).\delta$. Ainsi, la somme de tensions Vp et vq, converties respectivement en p et q, s'écrit $(p+q+1).\delta$ et la différence $(p-q).\delta$.

Cette grandeur z, par exemple également codée sur 3 bits, est fournie à des moyens de sommation 78 uniques qui somment sur N échantillons les différences d'énergie calculées par les moyens de calcul 77. Les moyens de sommation 78 sont suivis de moyens de comparaison 79 de la somme sur N échantillons de ces différences d'énergie avec une valeur de référence Ref sensiblement égale à la moitié de la somme des différences d'énergie sur N échantillons. Les moyens de comparaison 79 génèrent alors l'information de voie porteuse de l'énergie la plus importante à l'attention du multiplexeur 70 pour que celui-ci fournisse comme précédemment au corrélateur 71 la voie, réelle ou imaginaire, qui porte le plus d'énergie.

Ce mode de réalisation présente l'avantage de ne nécessiter qu'un sommateur 78, au lieu de deux (67, 68) dans le mode de réalisation de la figure 6.

Les figures 8A à 8D sont des représentations graphiques corrélatives des traitements effectués. La figure 8A représente les différentes configurations possibles de la constellation reçue, le signal étant modulé en BPSK ou plus précisément n'utilisant que deux états opposés de la modulation QPSK.

Les points correspondent à des niveaux -1 et les croix à des niveaux +1. La première constellation représentée n'a pas subi de déphasage ($\theta = 0°$), la seconde un déphasage de 180°, la troisième un déphasage de -90° et la dernière un déphasage de +90°.

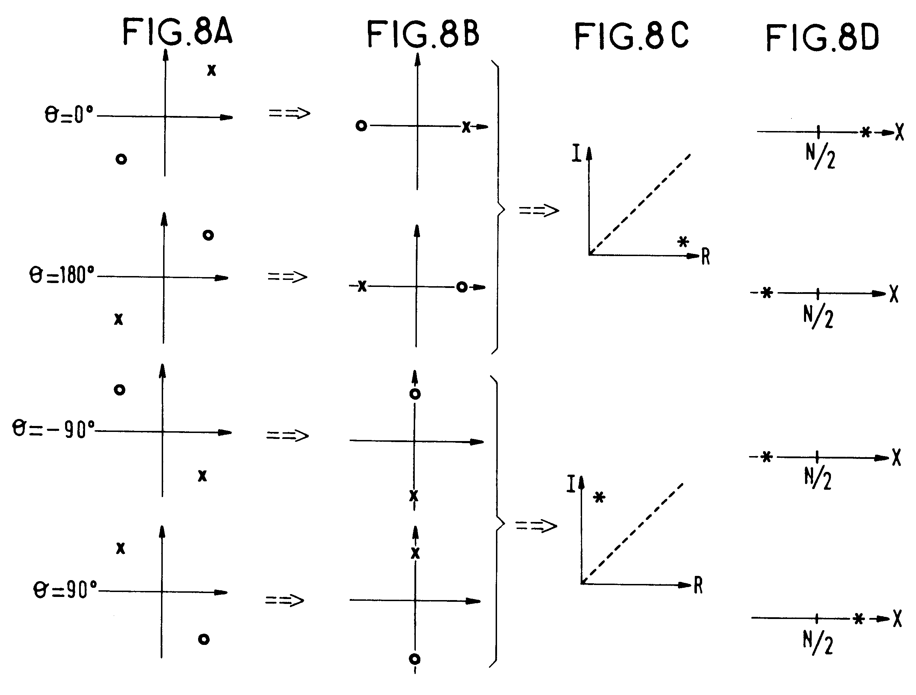

Les constellations corrélatives après rotation de $\pi/4$ sont représentées à la figure 8B. Les différents échantillons sont placés sur les axes réels (pour $\theta = 0$ et 180°) ou alors sur les axes imaginaires (pour $\theta = \pm 90°$). On notera que cette rotation permet de gagner 3 dB de rapport signal sur bruit. Elle peut être de $\pm \pi/4$. Il est dès lors possible d'effectuer une détection d'énergie pour savoir sur lequel des deux axes les échantillons se situent et décider (fig.8C) que ceux-ci sont sur l'axe réel (astérisque dans la zone séparant l'axe réel et la première bissectrice, $\theta = 0$ ou 180°) ou sur l'axe imaginaire (astérisque dans la zone séparant l'axe imaginaire et la première bissectrice, $\theta = \pm 90°$).

Sur la figure 8D sont représentés les niveaux de corrélation x en sortie du corrélateur 72 pour les différentes valeurs de $\theta$ par rapport à N/2. La valeur de x est supérieure à N/2 pour $\theta = 0$ ou $+\pi/2$ et inférieure à N/2 pour $\theta = \pi$ ou $-\pi/2$. Le calcul de $|N-2x|$ réalisé par le circuit de calcul 72 permet d'obtenir une valeur comparable au seuil S.

La valeur de N est fonction de la longueur du mot unique MU et préférentiellement égale au nombre d'échantillons de ce mot unique. Dans l'exemple considéré, N=32.

Le fonctionnement en phase de poursuite et de recherche est donné ci-dessous :

En mode de poursuite, la détection d'énergie est effectuée à partir des N premiers échantillons situés dans la fenêtre de recherche. Cette fenêtre de recherche est ouverte environ à la moitié du mot de récupération de rythme RR pour tenir compte des dérives temporelles. Le ou les accumulateurs de la voie auxiliaire sont remis à zéro (commande RAZ) sur l'activation de ce signal d'ouverture de fenêtre. La sortie du multiplexeur 70 est maintenue dans la même position pendant toute la durée du test de corrélation sur le paquet. Lorsque la sortie du circuit de décision 74 change d'état, on connaît l'instant d'arrivée du paquet et donc la position des premiers échantillons de données.

En mode de recherche de synchronisation, il n'existe pas de synchronisation par fenêtre de recherche et le corrélateur 71 est réinitialisé tous les N échantillons. Il génère donc une information à une fréquence N fois plus faible que la fréquence symbole Fs. L'information produite en sortie du comparateur est utilisée pour positionner le multiplexeur 70 dans la position correcte et le paquet est déclaré détecté lorsque deux dépassements du seuil S se sont produits avec un espacement de N échantillons.

Le procédé de détection de mot unique de l'invention consiste donc à :

- décaler de $\pi/4$ la constellation de l'enveloppe complexe d'un signal issu d'un dispositif de récupération de porteuse ;
- détecter quelle voie de la constellation, réelle ou imaginaire, est porteuse de l'énergie la plus importante et calculer une valeur de corrélation entre le signal numérique véhiculé par cette voie et un mot unique de référence ;
- fournir une information de détection du mot unique dans le signal de la voie porteuse de l'énergie la plus importante lorsque la valeur de corrélation devient supérieure à une valeur prédéterminée.

## Revendications

1. Dispositif de détection de mot unique modulé en BPSK et adapté à un modem fonctionnant en mode TDMA, du type comprenant un dispositif (28) de récupération de la porteuse d'un signal reçu et fournissant l'enveloppe complexe ($r_k$) dudit signal reçu sur une voie réelle (P) et une voie imaginaire (Q), caractérisé en ce qu'il comporte :
   - des moyens de décalage angulaire (60,61 - 80,81) de $\pi/4$ de la constellation de ladite enveloppe complexe ($r_k$), ces moyens de décalage angulaire (60,61 - 80,81) fournissant un signal complexe ($z_k$) sur une voie principale et sur une voie auxiliaire constituées chacune d'une voie réelle et d'une voie imaginaire ;
   - des moyens de retard (64) de N échantillons sur ladite voie principale fournissant, sur une voie réelle et sur une voie imaginaire retardées, des échantillons retardés à un multiplexeur (70) ;
   - des moyens d'estimation (65,66,67,68,69 - 77,78,79) sur ladite voie auxiliaire pour estimer laquelle desdites voies réelle et imaginaire de ladite voie principale est porteuse de l'énergie la plus importante, lesdits moyens d'estimation (65,66,67,68,69 - 77,78,79) fournissant une information audit multiplexeur (70) pour que celui-ci fournisse sur sa sortie l'une desdites voies retardées, réelle ou imaginaire de ladite voie principale, correspondant à celle desdites voies de ladite voie auxiliaire porteuse de l'énergie la plus importante ;
- un corrélateur (71) recevant un mot unique (MU) de référence pour calculer un niveau de corrélation (x) entre le signal de sortie dudit multiplexeur (70) et ledit mot unique (MU) de référence ;
- des moyens de comparaison (72,73,74) dudit niveau de corrélation (x) avec une valeur de seuil (S) pour indiquer la détection dudit mot unique (MU) dans le signal de ladite voie appliquée audit corrélateur (71) lorsque ledit niveau de corrélation (x) est supérieur à ladite valeur de seuil (S).

2. Dispositif selon la revendication 1, caractérisé en ce que lesdits moyens d'estimation (65,66,67,68,69) comprennent :
- des moyens de sommation (67,68) sur N échantillons des énergies détectées sur chacune desdites voies réelle et imaginaire de ladite voie auxiliaire ;
- des moyens de comparaison (69) entre elles desdites énergies sommées, lesdits moyens de comparaison (69) fournissant ladite information audit multiplexeur (70) pour que celui-ci fournisse sur sa sortie l'une desdites voies retardées, réelle ou imaginaire, correspondant à celle desdites voies de ladite voie auxiliaire dont la somme des énergies est la plus importante.

3. Dispositif selon la revendication 1, caractérisé en ce que lesdits moyens d'estimation (77,78,79) comprennent :
- des moyens de calcul (77) de la différence d'énergie détectée entre chaque échantillon de ladite voie réelle et chaque échantillon de ladite voie imaginaire reçus au même instant ;
- des moyens de sommation (78) sur N échantillons desdites différences d'énergie ;
- des moyens de comparaison (79) de la somme desdites différences d'énergie avec une valeur de référence (Ref) sensiblement égale à la moitié de la somme desdites différences d'énergie, lesdits moyens de comparaison (79) générant ladite information à l'attention dudit multiplexeur (70).

4. Dispositif selon l'une des revendications 1 à 3, caractérisé en ce qu'il comprend également des moyens de levée d'ambiguïté (75) recevant d'une part ladite information fournie audit multiplexeur (70) et d'autre part ledit niveau de corrélation (x) pour fournir à un démodulateur (76) la valeur de l'angle de rotation ($\theta$) de ladite constellation par rapport à un angle de référence.

5. Procédé de détection de mot unique (MU) adapté à un modem analogique fonctionnant en mode AMRT, ledit mot unique (MU) étant modulé en BPSK, caractérisé en ce qu'il consiste à :
- décaler de $\pi/4$ la constellation de l'enveloppe complexe ($r_k$) d'un signal issu d'un dispositif de récupération de porteuse (28) ;
- détecter quelle voie de ladite constellation, réelle ou imaginaire, est porteuse de l'énergie la plus importante et calculer un niveau de corrélation (x) entre le signal numérique véhiculé par cette voie et un mot unique de référence (MU) ;
- fournir une information de détection dudit mot unique (MU) dans ledit signal de ladite voie porteuse de l'énergie la plus importante lorsque ledit niveau de corrélation (x) devient supérieur à une valeur prédéterminée (S).

# FIG.1

| RP | RR | MU | D |
|---|---|---|---|

10

# FIG.5

FIG.2

EP 0 632 610 A1

FIG.3

FIG.4

# FIG.6

EP 0 632 610 A1

## FIG.7

EP 0 632 610 A1

FIG.8A

θ=0°

θ=180°

θ=-90°

θ=90°

FIG.8B

FIG.8C

R  I  *  *  R  I

FIG.8D

X  N/2  *  X  *  N/2  X  N/2  *  X  *  N/2

Office européen
des brevets

**RAPPORT DE RECHERCHE EUROPEENNE**

Numero de la demande

EP 94 40 1445

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | FR-A-2 394 218 (IBM FRANCE)<br>* figures 2,3 *<br>* page 10, ligne 6 - ligne 38 *<br>--- | 1-5 | H04J3/06<br>H04L27/22 |
| A | FR-A-2 662 889 (ALCATEL)<br>* page 4, ligne 18 - page 5, ligne 2 *<br>--- | 1 | |
| A | EP-A-0 353 779 (NEC)<br>* abrégé; figure 1 *<br>* page 3, ligne 21 - page 4, ligne 45 *<br>----- | 1 | |

**DOMAINES TECHNIQUES RECHERCHES (Int.Cl.6)**

H04J
H04L

Le présent rapport a été établi pour toutes les revendications

| Lieu de la recherche | Date d'achèvement de la recherche | Examinateur |
|---|---|---|
| LA HAYE | 11 Octobre 1994 | Scriven, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)